(19) Europäisches Patentamt
European Patent Office
Office européen des brevets

(11) Veröffentlichungsnummer: **0 212 533 A2**

# (12) EUROPÄISCHE PATENTANMELDUNG

(21) Anmeldenummer: **86111107.8**

(22) Anmeldetag: **12.08.86**

(51) Int. Cl.4: **C08G 14/06**, C08L 21/00, //C08L9/06

(30) Priorität: **22.08.85 DE 3529985**

(43) Veröffentlichungstag der Anmeldung:
**04.03.87 Patentblatt 87/10**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Scholl, Thomas, Dr.**
**Witzfeldstrasse 47a**
**D-4005 Meerbusch 1(DE)**
Erfinder: **Preuss, Reinhard, Dr.**
**Franz-Fassbender-Strasse 7**
**D-4047 Dormagen 1(DE)**
Erfinder: **Abele, Manfred**
**Am Börschsgarten 16**
**D-5000 Koeln 90(DE)**
Erfinder: **Fries, Hermann, Dr.**
**Am Katterbach 60**
**D-5060 Bergisch Gladbach 2(DE)**
Erfinder: **Kempermann, Theo, Dr.**
**Friedrich-Schmidt-Strasse 16a**
**D-5000 Koeln 41(DE)**

## (54) Phenolharze, ihre Herstellung und diese enthaltende Kautschukmischungen.

(57) Phenolharze, hergestellt durch Kondensation aus Alkylphenol, Aldehyd, Polyamin und Polyether im molaren Verhältnis 1 zu 0,7 bis 1,3 zu 0,005 bis 0,2 zu 0,001 bis 0,3, eignen sich als Klebrigmachungsmittel für Kautschukmischungen.

EP 0 212 533 A2

# Phenolharze, ihre Herstellung und diese enthaltende Kautschukmischungen

Die Erfindung betrifft Phenolharze, die aus Alkylphenol, Aldehyd, Polyamin und Polyether hergestellt sind.

Bei der Konfektionierung von Gummiartikeln wie Reifen, Walzen und Schläuchen müssen die aneinander gefügten einzelnen Kautschukmischungen gut haften, damit diese sich vor der endgültigen Formgebung durch Verpressen und Vulkanisieren nicht wieder voneinander lösen.

Kautschukmischungen besitzen häufig keine ausreichende Konfektionsklebrigkeit. Es ist deshalb nötig, den Kautschukmischungen vor der Verarbeitung ein Klebrigmachungsmittel zuzusetzen, das neben einem Höchstmaß an Wirkung sehr gute Vertäglichkeit mit den Kautschuken und den darin eingearbeiteten Mischungsbestandteilen aufweist und keinen merklichen negativen Einfluß auf Verarbeitung, Vulkanisation, Alterung und die physikalischen Werte des Vulkanisats ausübt.

Aus der DE-OS 25 30 819 sind Klebrigmacherharze aus monosubstituierten Phenolen, Aldehyden und aliphatischen oder cycloaliphatischen Polyaminen mit mindestens zwei primären Aminogruppen bekannt.

Deren Wirkung ist für die Praxis noch nicht ausreichend.

Es wurde nun gefunden, daß Phenolharze, die aus Alkyl-oder Cycloalkylphenol, Aldehyd, Polyamin und Polyether hergestellt sind, eine gegenüber den bekannten Phenolharzen überlegene klebrigmachende Wirkung aufweisen.

Gegenstand der Erfindung sind daher Phenolharze hergestellt durch Kondensation aus Alkylphenol, Aldehyd, Polyamin und Polyether im molaren Verhältnis von 1 zu 0,7 bis 1,3 zu 0,005 bis 0,2 zu 0,001 bis 0,3.

Die Kondensation des Reaktionsgemisches erfolgt durch gemeinsames Erhitzen der Reaktionskomponenten auf 95 bis 180°C bei Drucken von 1 bis 7 bar. Die Reaktion kann in Gegenwart von Lösungsmitteln wie Toluol, Xylol oder anderen nicht oder nur teilweise mit Wasser mischbaren Lösungsmitteln ausgeführt werden. Bevorzugt wird jedoch lösungsmittelfrei kondensiert. Die Reaktion kann sauer katalysiert werden, z.B. mit p-Toluolsulfonsäure, Oxalsäure oder Essigsäure.

Bevorzugte Alkylphenole sind solche mit geradkettigen oder verzweigten o-oder p-ständigen $C_1$-$C_{15}$-Alkyl-oder $C_3$-$C_{15}$-Cycloalkylresten. Besonders bevorzugt sind Monoalkylphenole mit verzweigten $C_4$-$C_9$-Alkylgruppen.

Als Aldehyde eignen sich Formaldehyd und aliphatische Aldehyde mit 2 bis 6 C-Atomen, z.B. Acetaldehyd, Propionaldehyd, Butyraldehyd, Crotonaldehyd oder Mischungen derselben.

Formaldehyd kann in Form von Paraformaldehyd, Trioxan oder wäßriger Formalinlösung eingesetzt werden, wobei die letztgenannte Art bevorzugt wird.

Als Polyamin-Komponente werden z.B. aliphatische und cycloaliphatische Polyamine mit mindestens zwei primären Aminogruppen eingesetzt.

Beispiele sind diprimäre Alkylendiamine mit mindestens zwei und bevorzugt 2 bis 14 C-Atomen, wie Ethylendiamin, 1,2-oder 1,3-Propylendiamin, Di-1,2-propylentriamin, Di-1,3-propylentriamin, Tetramethylendiamin, Pentamethylendiamin, Hexamethylendiamin, Octamethylendiamin; Polyethylendiamine der Formel $H_2N$-$CH_2CH_2(NH$-$CH_2CH_2)_b$-$NH_2$, worin b eine ganze Zahl von 1 bis 150 bedeutet, wie Diethylentriamin, Triethylentetramin und Tetraethylenpentamin; Polyoxyethylendiamine, Polyoxypropylendiamine, 3-(2-Aminoethyl)-aminopropylamin, 1,2-Bis-(3-Aminopropylamino)-ethan, N,N'-Bis-(3-aminopropyl)-1,4-diaminobutan und 4,7,10-Trioxatridecan-1,13-diamin; cycloaliphatische und heterocyclische Amine, die im Ring besonders N-Atome aufweisen, wie z.B. 1,2-oder 1,3-Diaminocyclopentan, 1,2-, 1,3-oder 1,4-Diaminocyclohexan, 3,3'-, 3,4'-oder 4,4'-Diaminodicyclohexylmethan, 2,2-Bis-(4'-aminocyclo hexyl)propan, 4,4'-Diamino-3,3'-dimethyldicyclohexylmethan, 3-Aminomethyl-3,5,5-trimethylcyclohexylamin (Isophorondiamin), N,N'-Bis(3-aminopropyl)piperazin, N,N'-Bis(2-aminoethyl)-piperazin, 1,3- und 1,4-Bis-(Aminomethyl)cyclohexan und 3(4),8-(9)-Bis(aminomethyl)tricyclo[5,2,1,0 $^{2,6}$]decan.

Bevorzugt werden Polyamine der Formel

$$H_2N\text{-}[(CH_2)_n\text{-}NH]_m\text{-}(CH_2)_n\text{-}NH_2$$

eingesetzt, worin

n 2, 3 und

m 3 bis 150, vorzugsweise 3 bis 8, bedeuten,

z.B. Tetraethylenpentamin, Pentaethylenhexamin, Hexamethylenheptamin sowie deren Gemische.

Die Polyether entsprechen vorzugsweise der Formel

$$A-(CH_2-\overset{\overset{R^1}{|}}{C}H-O)_q-(CH_2-\overset{\overset{R^2}{|}}{C}H-O)_r-(CH_2-\overset{\overset{R^3}{|}}{C}H-O)_s-H$$

wobei

$R^1$,$R^2$ und $R^3$ Wasserstoff oder $C_1$-$C_{12}$-Alkyl,

q, r, s ganze Zahlen von 0 bis 300,

A Wasserstoff, -OH, -$OR^4$, -$OCOR^4$, $NHCOR^4$ und

$R^4$ Alkyl, Aryl oder Aralkyl bedeuten und

die Summe aus q, r und s wenigstens 2 ist.

Bevorzugte Polyether entsprechen der Formel

$$HO-(CH_2-\overset{\overset{R^1}{|}}{C}H-O)_q-(CH_2-\overset{\overset{R^2}{|}}{C}H-O)_r-(CH_2-\overset{\overset{R^3}{|}}{C}H-O)_s-H$$

worin

$R^1$, $R^2$ und $R^3$ Wasserstoff oder Methyl und

q, r, s ganze Zahlen von 0 bis 200 bedeuten, und

die Summe aus q, r uns s wenigstens 2, vorzugsweise wenigstens 5 ist.

Vorzugsweise stellt man die erfindungsgemäßen Klebrigmacherharze her, indem man das Gemisch aus Alkylphenol, Polyamin und Polyether vorlegt und nach Zugabe des Aldehyds 3 bis 5 Stunden auf 95 bis 100°C erhitzt. Dann wird zunächst Wasser durch azeotrope Destillation, z.B. mit aromatischen Lösungsmitteln wie Toluol oder Xylol, entfernt und anschließend überschüssiges Phenol erst bei Normaldruck, dann im Vakuum bei 120 bis 180°C abdestil liert. Ein bevorzugtes Verfahren zur Harzisolierung ist die Aufarbeitung der Harzlösung nach der vorangegangenen azeotropen Entwässerung mittels eines Schlangenrohrverdampfers, der von einem bis auf 180°C geheizten Medium ummantelt ist.

Die Erweichungspunkt der erhaltenen Harze liegt zwischen 50 und 150°C. Die Harze haben ein mittleres Molekulargewicht von 800 bis 4000 - (Gewichtsmittel, gelchromatographisch bestimmt).

Der erfindungsgemäßen Harze sind ausgezeichnete Klebrigmachungsmittel für Elastomere wie Naturkautschuk (NR), Styrol-Butadien-Copoylmer (SBR), Acrylnitril-Butadien-Copolymer (NBR), Polybutadien (BR), Polychloropren (CR), Polyisopren (IR), Isobutylen-Isopren-Copolymer (IIR), Ethylen-Propylen-Terpolymere (EPDM) sowie deren Mischungen untereinander. Die Dosierung der Harze in der Kautschukmischung beträgt 0,3 bis 8 Gew.-%, vorzugsweise 1 bis 6 Gew.-%, bezogen auf das Kautschukgewicht. Sie werden in üblicher Weise eingemischt.

Die klebrigmachende Wirkung der Harze erstreckt sich auf die verschiedensten Mischungstypen, wie Schlauchmischungen, Walzenmischungen, Reifenmischungen, Konfektionsmischungen, Preß-und Spritzmischungen, denen gegebenenfalls Füllstoffe wie Ruß, Kaolin, Kieselsäuren oder Weichmacher zugemischt sein können.

Eine Beeinträchtigung der Verarbeitungseigenschaften der mit den Klebrigmacherharzen in üblicher Dosierung versetzten Kautschukmischungen konnte nicht festgestellt werden.

Die Bewertung der Klebigkeitswirkung erfolgt in Abwandlung der üblichen Prüfverfahren nach einer eigens entwickelten Methode. Hierbei wird mit einer konstanten Last gearbeitet (Prinzip eines Kriechversuchs) und die zum Auseinanderziehen zweier Flächen erforderliche Zeit gemessen. Diese ist direkt proportional der Klebrigkeitswirkung und liefert unmittelbar eine Meßzahl für die Klebrigkeit.

## Ausführung der Klebrigkeitsprüfung

Die beiden Enden eines streifenförmigen Prüfkörpers mit den Maßen 150 x 20 x 2 mm werden mit einer Oberfläche von 20 x 10 mm unter Aufbringen eines spezifischen Druckes von 3,5 MPa während 30 sec zusammengepreßt, nachdem der streifenförmige Prüfkörper mit seinen Enden ringförmig so zusammengelegt wurde, daß die beiden mit Kautschukmischung beschichteten Seiten aufeinanderliegen. Der so entstandene Ring wird über eine lose Rolle gelegt. Anschließend wird in die untere Beuge eine weitere bewegliche Rolle eingehängt, die mit unterschiedlichen Gewichten belastet werden kann. Nach dem Einhängen der

Lastrolle wird die Zeit bis zur vollkommenen Lösung der miteinander verbundenen Kontaktflächen des Prüfkörpers bestimmt (nach 300 sec wird der Versuch abgebrochen).

Herstellung der Kautschukmischungen und Prüfkörper: Die in den folgenden Beispielen genannten Mischungen, deren Konfektionsklebrigkeit gemessen werden soll, wurden nach der in der Gummiindustrie üblichen Mischweise und Mischfolge im Kneter gemischt, wobei die Klebrigmacherharze und Vulkanisationsbeschleuniger auf der Mischwalze nachgemischt wurden.

Die Prüfmischungen wurden zu Fellen von 1,2 bis 1,3 mm Stärke ausgezogen, die Felle nach 24 Stunden Lagerung auf ein mit Polychloroprenkleber bestrichenes Baumwollgewebe (300 x 300 mm) gelegt und nach Abdeckung der Mischungsoberfläche mit Pausleinen sowie der Gewebeoberfläche mit Cellophan in einem Rahmen von 300 x 300 x 2 mm zwischen Stahlblechen in einer üblichen Etagenpresse bei 200 kp/cm² Betriebsdruck 5 Minuten bei 110°C gepreßt. Aus den erhaltenen Platten wurden Prüfkörper von 150 x 20 mm gestanzt.

Vor der Klebrigkeitsmessung wird das Pausleinen abgezogen und beide Ende des Prüfstreifens auf einer Fläche von 20 x 10 mm mit n-Hexan bestrichen. Nach dem Abdunsten werden die Prüfkörper in der eben beschriebenen Weise zu einem Ring zusammengefügt und die Klebrigkeit gemessen.

Beispiel 1

Eine Mischung aus 335 g p-tert.-Butylphenol, 16,8 g Octaethylenglykol und 22,5 g Pentaethylenhexamin wird bei 90°C mit 154 g 35 %igem Formalin versetzt und 4,5 Stunden zum Rückfluß erhitzt. Anschließend werden zuerst das Wasser bis 150°C Innentemperatur und dann alle anderen flüchtigen Bestandteile im Wasserstrahlvakuum bis 170°C abdestilliert. Man erhält ca. 350 g rötlich braunes, festes Harz mit einem Erweichungspunkt von 130°C und dem $\bar{M}_w$ = 1.400.

Beispiel 2

Eine Mischung von 335 g p-tert.-Butylphenol, 6,72 g Octaethylenglykol und 22,5 g Pentaethylenhexamin wird bei 90°C mit 154 g 35 %igem Formalin versetzt und 4,5 Stunden zum Rückfluß erhitzt. Die Aufarbeitung erfolgt nach Beispiel 1.

Erweichungspunkt 135°C, $\bar{M}_w$ = 1.200

Beispiel 3

Eine Mischung von 910 g p-tert.-Octylphenol, 45 g Pentaethylenhexamin und 36, 4 g Polyethylenoxid ( $\bar{M}_w$ 800) wird bei 90°C mit 365 g 35 %igem Formalin versetzt und 4,5 Stunden zum Rückfluß erhitzt. Aufarbeitung erfolgt nach Beispiel 1.

Erweichungspunkt 70°C, $\bar{M}_w$ = 1.800.

Beispiel 4

Eine Mischung aus 167,5 g p-tert.-Butylphenol, 11,25 g Polyethylenimin ( $\bar{M}_w$ 10.000) und 8,4 g eines mit der 10-fach molaren Menge Ethylenoxid ethoxyliertes Nonylphenol wird bei 90°C mit 72,5 g 37 %igem Formalin versetzt und 4,5 Stunden zum Rückfluß erhitzt. Die Aufarbeitung erfolgt nach Beispiel 1.

Erweichungspunkt 88°C, $\bar{M}_w$ = 1.500.

Die Prüfmischung hat folgende Zusammensetzung:

Emulsions-SBR 103,0 Gew.-Tle.

Polybutadien 25,0 Gew.-Tle.

Zinkoxid 5,0 Gew.-Tle.

Ruß N 220 75,0 Gew.-Tle.

arom. Mineralölweichmacher 12,0 Gew.-Tle.

Stearinsäure 2,0 Gew.-Tle.

Schwefel 1,8 Gew.-Tle.

Benzthiazyl-2-cyclohexyl-sulfenamid 1,2 Gew.-Tle.

Klebrigmacher 4,0 Gew.-Tle.

| Versuch | Klebrigmacher | Trennzeit (sec) | Belastung (g) |
|---|---|---|---|
| a | Beispiel 1 | >300 | 250 |
| b | Beispiel 2 | 228 | 250 |
| c | Beispiel 3 | 128 | 375 |
| d | Bsp.1, DE-OS 25 30 819 | 40 | 375 |
| e | Beispiel 3 | 139 | 500 |
| f | Bsp.3 ohne Polyether gemäß DE-OS 25 30 819 | 96 | 500 |

Erläuterungen:

a) Die Trennzeiten sind Durchschnittswerte aus jeweils 5 Messungen.

b) die gestrichelten Linien dienen der Kenntlichmachung der einzelnen Mischungen. Vergleiche dürfen nur innerhalb desselben Mischungsansatzes durchgeführt werden.

## Ansprüche

1. Phenolharze, hergestellt durch Kondensation aus Alkylphenol, Aldehyd, Polyamin und Polyether im molaren Verhältnis 1 zu 0,7 bis 1,3 zu 0,005 bis 0,2 zu 0,001 bis 0,3.

2. Phenolharze nach Anspruch 1, wobei das Alkylphenol o-oder p-$C_1$-$C_{15}$-Alkyl oder -$C_3$-$C_{15}$-Cycloalkylphenol, vorzugsweise ein Monoalkylphenol mit verzweigten $C_4$-$C_9$-Alkylgruppen ist.

3. Phenolharze nach Anspruch 1, wobei der Aldehyd Formaldehyd oder ein aliphatischer Adlehyd mit 2 bis 6 C-Atomen ist.

4. Phenolharze nach Anspruch 1, wobei das Polyamin eine aliphatische oder cycloaliphatische Verbindung mit mindestens zwei primären Aminogruppen ist.

5. Phenolharze nach Anpruch 1, wobei das Polyamin der Formel

$$H_2N-[(CH_2)_n-NH]_m-(CH_2)_n-NH_2$$

entspricht, worin

n 2 oder 3 und

m 3 bis 150, vorzugsweise 2 bis 8, bedeuten.

6. Phenolharze nach Anspruch 1, wobei der Polyether der Formel

entspricht, wobei

$R^1$,$R^2$ und $R^3$ Wasserstoff oder $C_1$-$C_{12}$-Alkyl,

q, r, s ganze Zahlen von 0 bis 300,

A Wasserstoff, -OH, $OR^4$, -$OCOR^4$, $NHCOR^4$ und

$R^4$ Alkyl, Aryl oder Aralkyl bedeuten

und die Summe aus q, r und s wenigstens 2 ist.

7. Phenolharze nach Anspruch 6, wobei

$R^1$, $R^2$, $R^3$ Wasserstoff oder Methyl,

q, r, s ganze Zahlen von 0 bis 200 und

A OH bedeuten und die Summe

aus q, r und s wenigstens 2 ist.

8. Verfahren zur Herstellung von Phenolharzen, dadurch gekennzeichnet, daß man Alkylphenol, Aldehyd, Polyamin und Polyether im molaren Verhältnis 1 zu 0,7 bis 1,3 zu 0,005 bis 0,2 zu 0,001 bis 0,3 bei 95 bis 180°C und Drücken von 1 bis 7 bar kondensiert.

9. Kautschukmischungen enthaltend 0,3 bis 8 Gew.-% eines Phenolharzes gemäß Anspruch 1, bezogen auf Kautschukfeststoff, und gegebenenfalls weitere übliche Kautschukmischungsbestandteile.